# EUROPEAN PATENT SPECIFICATION

(11) **EP 0 594 246 B1**
(45) Date of publication and mention of the grant of the patent: **04.03.1998**
(21) Application number: 93202878.0
(22) Date of filing: 13.10.1993
(51) Int. Cl.: H04N 7/00

(54) **Data processing circuit**
Datenverarbeitungsschaltung
Circuit de traitement de données

(30) Priority: 22.10.1992 EP 92203253
(43) Date of publication of application: 27.04.1994
(73) Proprietor: Philips Electronics N.V., 5621 BA Eindhoven (NL)
(72) Inventor: Rijns, Johannes Jozef Franciscus, NL-5656 AA Eindhoven (NL)
(74) Representative: Kooiman, Josephus Johannes Antonius

(56) References cited:
- US-A- 4 115 811

## Description

### FIELD OF THE INVENTION

The invention relates to a data processing circuit for processing a serial data signal. A serial data signal is herein understood to mean a signal which represents the bit values of a transmitted bit stream at discrete sampling instants. More particularly, the invention relates to a data processing circuit for processing a teletext data signal, in which the bit stream is transmitted in picture lines of a television signal. The invention also relates to a device for measuring the amplitude of the data signal.

### BACKGROUND OF THE INVENTION

Demodulation of a data signal for obtaining the transmitted bit stream comprises two operations. In a first operation, referred to as clock regeneration, a sampling frequency is regenerated from the data signal, which frequency corresponds to the clock frequency of the bit stream. In a second operation, referred to as data slicing, the data signal is compared with a slice level. The bit stream is regained by checking whether the data signal at the sampling instants is larger or smaller than the slice level.

US - A - 4 115 811 discloses a data slicing apparatus for video signals in which the input signal is compared to a reference signal. The reference signal is generated by sampling and holding a low-pass-filtered version of the input signal on the basis of a control signal, which is a pulse generated on the basis of the sync and clock signals present in the input video signal.

For a reliable demodulation of the bit stream a certain eye opening (height and width) of the data signal is required. The eye height is the worst case distance between the positive and negative sampling values of the data signal with respect to the nominal data amplitude. The eye width, also referred to as decoding margin, determines the allowed tolerances at the sampling instants of the clock regenerator. At the transmitter end the eye height is approximately 100% and the eye width is substantially equal to the bit period. However, during the transmission the data signal is affected by external disturbances. For example, a television signal, and hence the teletext data signal incorporated therein, is subject to, *inter alia* reflections (echoes) and interference of adjacent television channels (cochannel). Echoes cause local minima and maxima in the data signal, while cochannel becomes manifest as a slow variation of the DC level. Such disturbances reduce the eye opening and hence the reliability of the bit stream demodulation.

### OBJECT AND SUMMARY OF THE INVENTION

It is an object of the invention to provide a data processing circuit with which the reliability of the bit stream demodulation is enhanced.

According to the invention, the data processing circuit comprises a track-and-hold circuit to which the data signal and a control signal are applied. The output signal of such a track-and-hold circuit tracks the applied data signal when the control signal has a first value and holds the data signal upon transition of the control signal to a second value. The data processing circuit further comprises first detection means for detecting the occurrence of peak values of the data signal, means for generating a provisional slice level and second detection means for detecting whether the data signal intersects the provisional slice level. A control circuit coupled to the detection means generates the first value of the control signal if the data signal intersects the provisional slice level, and generates the second value if a peak value of the data signal occurs.

Thus, the data processing circuit supplies an output signal which alternately holds the positive and negative peak values of the data signal for some time. As it were, the output signal is a replica of the data signal, though with a larger eye width and largely deprived of local minima. Consequently, the output signal has a larger eye opening than the data signal. This signal can be applied to a conventional data slicer and has a smaller error probability.

The provisional slice level determines the instants when the data processing circuit changes over from positive to negative tracking, and conversely. No stringent requirements are imposed on the accuracy of this provisional slice level. Consequently, this level can be obtained in a simple manner, for example by low-pass filtering of the data signal or the output signal.

A further embodiment of the data processing circuit comprises a first sample-and-hold circuit for sampling positive peak values and a second sample-and-hold circuit for sampling negative peak values. The data processing circuit thereby acquires the function of an envelope detector which provides both the positive and the negative envelope of the data signal. If the data signal is disturbed by cochannel interference, the cochannel component in both envelopes is present to the same extent. By averaging both envelopes, a data slice level is obtained which tracks the cochannel interference and is optimally located in the centre of the eye.

It is to be noted that the book "Teletext and Viewdata" by Steve A. Money, pp. 19-34, describes an adaptive data slicer for teletext data signals. In this data slicer the data signal is applied to a positive peak detector and to a black level detector. The slice level is derived from the output signals thereof. However, the black level detector does not track the variations of the negative sampling values. Consequently, the slice level is not optimally adapted to the perturbations which are present in the data signal. Moreover, the known data slicer has the drawback that two separate circuits are used for obtaining the two envelopes.

If the two envelopes are subtracted from each other, a difference signal which is free from cochannel is obtained and which can be applied to a further envelope detector. It has been found that the positive envelope of the difference signal corresponds to the original data amplitude plus echo amplitude and that the negative envelope of the difference signal corresponds to the original data amplitude minus echo amplitude. Averaging of the two envelopes thus yields the amplitude of the data signal. A slice level which is free from echo is obtained by adding this amplitude to the negative envelope or by subtracting it from the positive envelope.

### BRIEF DESCRIPTION OF THE FIGURES

Fig. 1 shows some signal waveforms to explain the structure of a serial data signal.

Fig. 2 shows a data processing circuit according to the invention.

Fig. 3 shows some signal waveforms to explain the data processing circuit of Fig. 2.

Fig. 4 shows a further embodiment of the data processing circuit according to the invention.

Fig. 5 shows some signal waveforms to explain the data processing circuit of Fig. 4.

Fig. 6 shows a data slicer comprising the data processing circuit of Fig. 4.

Fig. 7 shows a device for measuring the amplitude of a data signal

Fig. 8 shows some signal waveforms to explain the device of Fig. 7.

### DESCRIPTION OF EMBODIMENTS

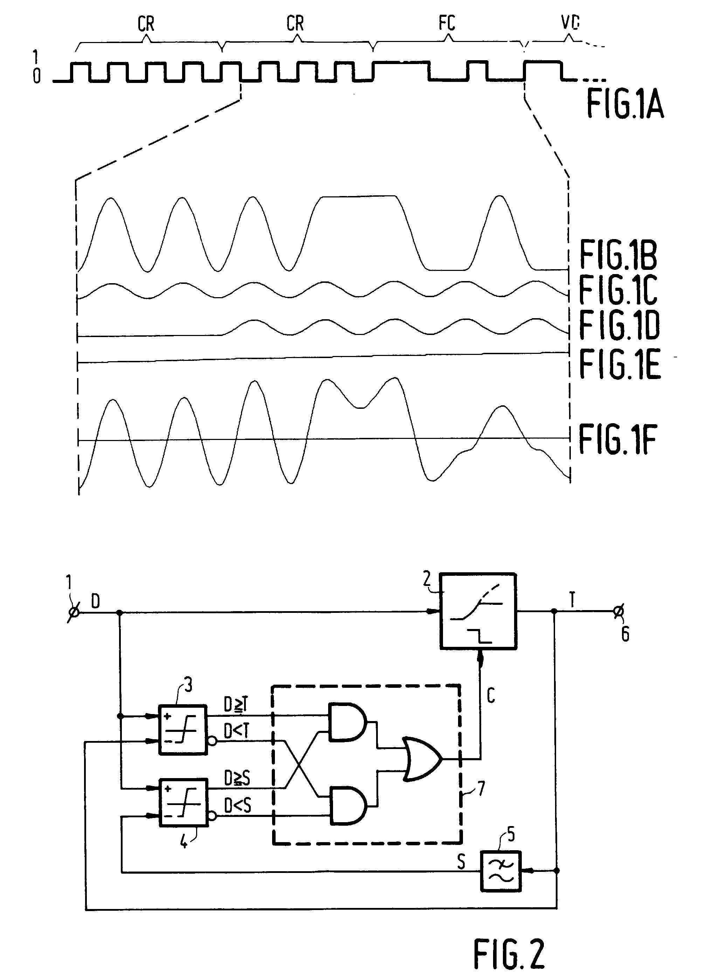

Fig. 1A shows a serial teletext bit stream transmitted in a picture line of a television signal during the vertical field retrace. The bit stream comprises two clock-run-in bytes CR forming a pattern of alternating zeros and ones, a framing code byte FC with a predetermined fixed bit pattern and variable data VD. The bit rate is approximately 7 Mbit/sec. For a portion of the bit stream, Fig. 1B shows the signal waveform of the corresponding teletext data signal transmitted by the television transmitter.

During transmission the data signal is subject to echoes and cochannel. To illustrate this, Fig. 1C shows a negative echo of the data signal with a delay of 7T (T is the bit period). In a corresponding manner, Fig. 1D shows a positive echo with a delay of 14T. The combination of these two echoes is known in the teletext literature by the abbreviation DELPHI (Defined Eye Loss with Precision Held Indication) and is generally used as a standard interference of a teletext data signal for measurements of data slicers. Fig. 1E further shows cochannel interference in the form of a low-frequency sine with a small amplitude.

Due to the interference thus introduced, the teletext data signal has acquired the shape at the receiver end, which shape is shown in Fig. 1F. The echoes cause local minima and maxima in the data signal and the cochannel becomes manifest as a slow variation of the DC level.

Fig. 2 shows an embodiment of a data processing circuit according to the invention. The data signal D received at an input 1 is applied to a track-and-hold circuit 2, to a positive input of a first comparator 3 and to a positive input of a second comparator 4. The track-and-hold circuit 2 further receives a control signal C and supplies an output signal T. The output signal T is applied to a negative input of the first comparator 3, to a low-pass filter 5 and to an output 6 of the circuit. The output of the low-pass filter 5 supplies a provisional slice level S which is applied to the negative input of the second comparator 4. The first comparator 3 compares the data signal with the output signal T and activates a respective output D ≥ T or D < T. The second comparator 4 compares the data signal D with the provisional slice level S and activates a respective output D ≥ S or D < S. Said outputs are coupled to a control circuit 7 which generates the control signal C for the track-and-hold circuit 2. The control circuit 7 shown in Fig. 2 supplies C= "1" if D ≥ T and D ≥ S or if D < T and D < S. Other input combinations lead to C = "0".

The track-and-hold circuit 2 is generally known. The circuit tracks the input signal (track mode) when the control signal C has the logic value "1" and maintains the output signal constant (hold mode) when the control signal C has the logic value "0".

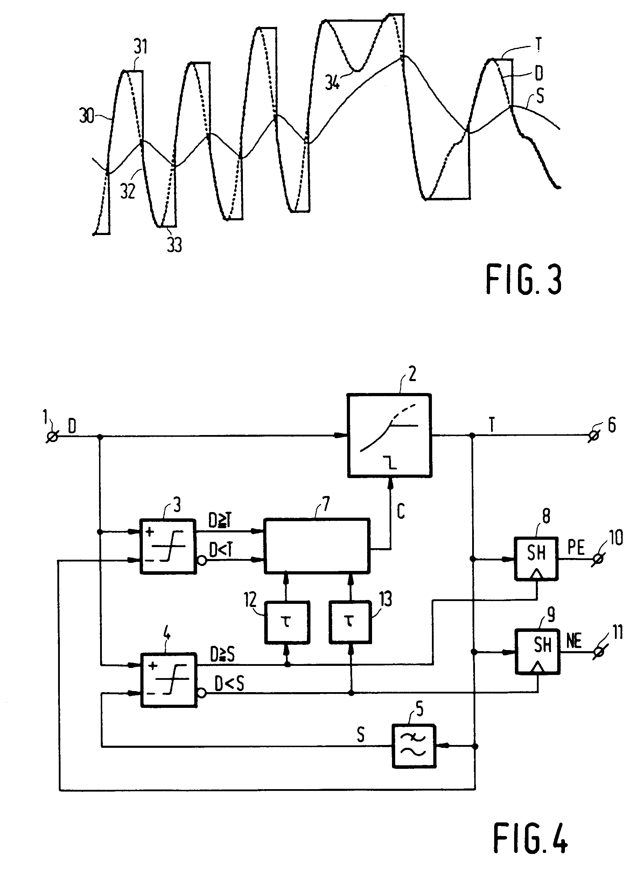

To explain the data processing circuit, Fig. 3 shows the signal waveforms of the data signal D, the provisional slice level S and the output signal T. The signal waveform shown in Fig. 1F has been taken as the data signal D. As long as the data signal D is larger than or equal to the output signal (D ≥ T) and is also larger than the provisional slice level (D ≥ S), C = "1". The output signal then tracks the data signal. This is denoted by the reference numeral 30 in the Figure. After the data signal has reached a local peak value, D will become < T. The control circuit now supplies C = "0" so that the track-and-hold circuit assumes the hold mode. The output signal now remains constant and the local peak value is held. This is denoted by the reference numeral 31 in the Figure. The hold mode is maintained until the data signal intersects the provisional slice level and D becomes < S. Consequently, C becomes "1" and the track-and-hold circuit resumes the track mode in which the output signal tracks the data signal. This is denoted by the reference numeral 32 in the Figure. After a negative peak value has been reached, the hold mode follows again in which the output signal remains constant and now the negative peak value is held. This is denoted by the reference numeral 33 in the Figure.

As is apparent from Fig. 3, the data processing circuit produces, as it were, a replica of the data signal, though with a larger eye opening. The time margin in which the output signal can be sampled is considerably larger than the corresponding margin at the original data signal. Consequently, less stringent requirements are imposed on the precision (jitter) of a clock regenerator to which the output signal is applied. Moreover, the data signal has been deprived of local minima to a considerable extent. For example, the local minimum denoted by the reference numeral 34 in Fig. 3 is no longer present in the output signal. Consequently, a data slicer to which this output signal is applied produces fewer errors.

Fig. 4 shows a further embodiment of the data processing circuit. In this Figure elements denoted by the same reference numerals have the same significance as in Fig. 2. The data processing circuit now further comprises two sample-and-hold circuits 8 and 9 having outputs 10 and 11, respectively. The inputs of both sample-and-hold circuits receive the output signal T from the track-and-hold circuit 2. The signals D ≥ S and D < S are applied as clock signals for the sample-and-hold circuits. The sampling instant is determined by the negative edges of the clock signal.

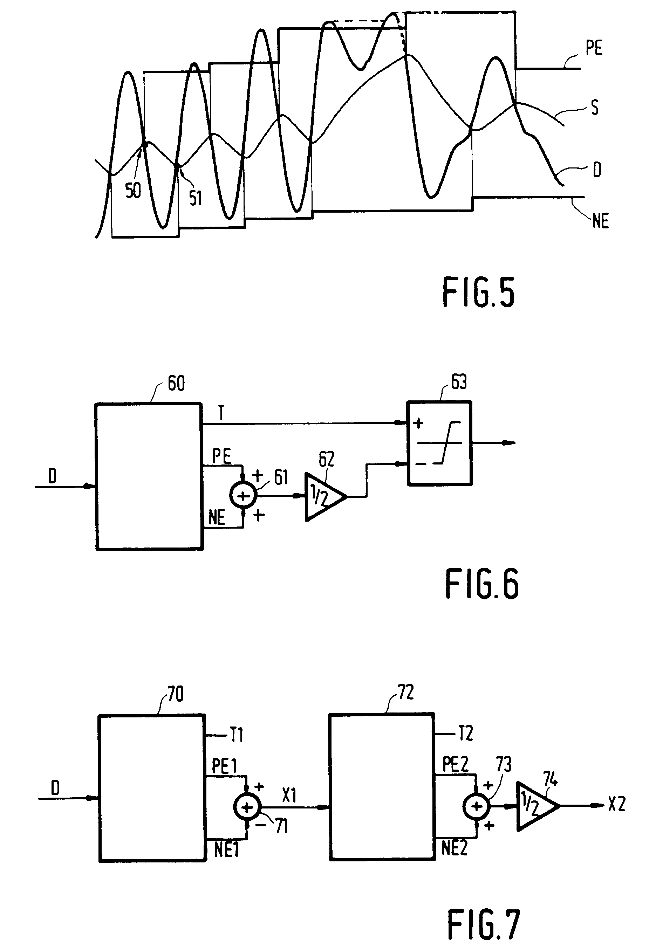

Fig. 5 shows some signal waveforms to explain the data processing circuit shown in Fig. 4. At the instant denoted by the reference numeral 50 the data signal D intersects the provisional slice level S so that a negative edge is produced at the output D ≥ S of comparator 4. Consequently, sample-and-hold circuit 8 is clocked and the output signal T is sampled. At this sampling instant the output signal T still has the positive peak value of the data signal D. At the instant denoted by the reference numeral 51 the data signal D again intersects the provisional slice level S. Now, the negative edge is produced at the output D < S of comparator 4 and the second sample-and-hold circuit 9 is clocked. This circuit then samples the negative peak value of the data signal. In this way a positive envelope PE is obtained at the output 10 of sample-and-hold circuit 8. In a corresponding manner, a negative envelope NE is obtained at output 11 of sample-and-hold circuit 9. To ensure that the peak value is sampled before the track-and-hold circuit changes its mode, a short delay τ may be introduced between the outputs of comparator 4 and the control circuit 7. This delay is denoted by the reference numerals 12 and 13, respectively, in Fig. 4.

Fig. 6 shows a data slicer. This slicer comprises a data processing circuit 60, an adder 61, a multiplier 62 and a comparator 63. The data processing circuit 60 is constituted by the circuit shown in Fig. 4. The circuit receives the data signal D and supplies the output signal T as well as the positive envelope PE and the negative envelope NE of the data signal. Both envelopes PE and NE are added in the adder 61. The sum signal is halved by the multiplier 62. Consequently, the multiplier supplies the comparator 63 with a slice level which is located halfway between the two envelopes. If the data signal is disturbed by cochannel interference, the two envelopes comprise the same cochannel component. The slice level supplied by multiplier 62 tracks this cochannel interference and is thus always optimally located in the centre of the eye opening.

Fig. 7 shows a device for measuring the amplitude of a data signal. The device comprises a first data processing circuit 70 and a second data processing circuit 72. Both data processing circuits are constituted by the circuit shown in Fig. 4. The data signal is applied to the first data processing circuit. The positive and negative envelopes of this data signal, now referred to as PE1 and NE1, respectively, are subtracted from each other in a subtracter circuit 71. The difference signal X1 obtained therefrom is applied to the data signal input of the second data processing circuit 72. The second data processing circuit now constitutes the positive and negative envelopes PE2 and NE2, respectively, of the difference signal in the manner already described. These envelopes are summed by an adder 73 and halved by a multiplier 74. The output signal X2 thus obtained represents the mean value of the envelopes PE2 and NE2.

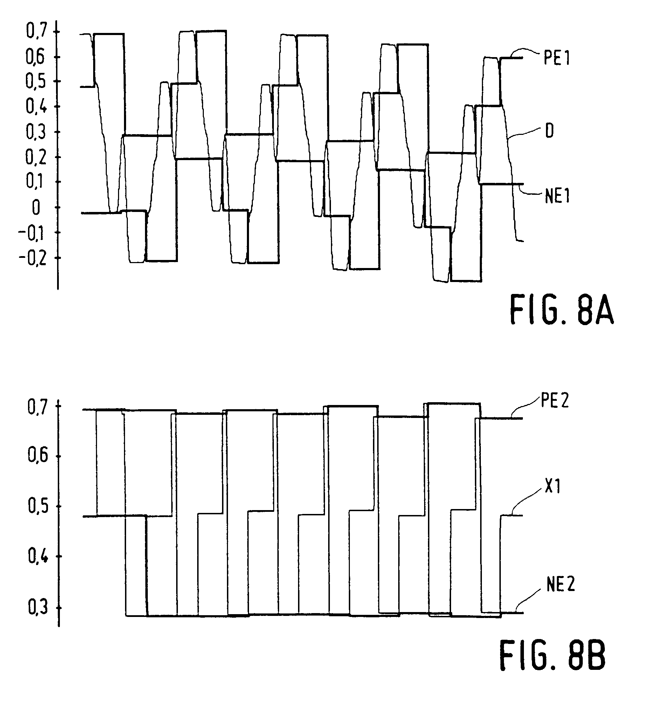

Fig. 8 shows some signal waveforms to explain the device of Fig. 7. The data signal applied to the device is assumed to represent a bit stream comprising a repetition of the framing code 11100100 and its inverse 00011011. The data signal comprises cochannel and echo components. This is denoted by D in Fig. 8A. Fig. 8A further shows the two envelopes PE1 and NE1. As already stated hereinbefore and as apparent from the Figure, the two envelopes have the same DC variations due to the cochannel interference. The difference signal X1 = PE1-NE1 , shown in Fig. 8B, is thus free from cochannel. This signal is applied to the second data processing circuit 72 (see Fig. 7) which generates the positive and negative envelopes of the difference signal. These two envelopes are denoted by PE2 and NE2, respectively in Fig. 8B. It has been found that the positive envelope PE2 is representative of the data amplitude plus the echo amplitude and that the negative envelope NE2 is representative of the data amplitude minus the echo amplitude. To illustrate this, the signals in Fig. 8 have been given concrete scale values. The original (undisturbed) data signal has an amplitude of 0.5 Vₚₚ and the echo amplitude is 0.2 Vₚₚ (40% echo). It is apparent from Fig. 8B that PE2 = 0.7 V and NE2 = 0.3 V. The mean value thereof (0.5 V) corresponds to the original data amplitude.

The device for measuring the data amplitude may be used in different ways. For example, half the amplitude may be added to the black level of a television signal in order to obtain an optimum slice level, even at a large echo amplitude. The device may also be incorporated in the control system of a controllable amplifier for obtaining a data signal of constant amplitude.

## Claims

1. A data processing circuit for processing a serial data signal (D), comprising:
- a track-and-hold circuit (2) to which the data signal (D) and a control signal (C) are applied for generating an output signal (T) tracking the data signal when the control signal has a first value and holding the data signal upon transition of the control signal to a second value;
- first detection means (3) for detecting the occurrence of peak values of the data signal;
- means for generating a provisional slice level (5);
- second detection means (4) for detecting whether the data signal intersects the provisional slice level;
- a control circuit (7) coupled to the detection means for generating the first value of the control signal if the data signal intersects the provisional slice level and for generating the second value if a peak value of the data signal occurs.

2. A data processing circuit as claimed in Claim 1, characterized in that the first detection means (3) are constituted by a comparator (3) for comparing the data signal with the output signal.

3. A data processing circuit as claimed in Claim 1, characterized in that the means for generating the provisional slice level are constituted by a low-pass filter (5) to which the output signal is applied.

4. A data processing circuit as claimed in Claim 1, characterized in that the means for generating the provisional slice level are constituted by a low-pass filter (5) to which the data signal is applied.

5. A data processing circuit as claimed in Claim 1, characterized in that the circuit further comprises a first sample-and-hold circuit (8) for sampling the output signal at the occurrence of positive peak values so as to obtain a positive envelope (PE), and a second sample-and-hold circuit (9) for sampling the output signal at the occurrence of negative peak values so as to obtain a negative envelope (NE).

6. A data processing circuit as claimed in Claim 5, characterized in that the circuit further comprises means (61, 62, 63) for generating a further slice level by averaging the positive and negative envelopes.

7. A device for measuring the amplitude of a data signal, characterized by:
- a first data processing circuit (70) as claimed in Claim 5 for obtaining the positive and negative envelopes (PE1, NE1) of the data signal (D);
- means for subtracting (71) said envelopes from each other so as to obtain a difference signal (X1);
- a second data processing circuit (72) as claimed in Claim 5 to which the difference signal is applied for obtaining the positive and negative envelopes (PE2, NE2) of the difference signal (X1);
- means (73, 74) for determining the amplitude of the data signal by averaging the positive and negative envelopes of the difference signal.

## Patentansprüche

1. Datenverarbeitungsschaltung zum Verarbeiten eines seriellen Datensignals (D) mit:
- einer Folge-und-Halteschaltung (2), der das Datensignal (D) und ein Steuersignal (C) zugeführt werden zum Erzeugen eines Ausgangssignals (T), das dem Datensignal folgt, wenn das Steuersignal einen ersten Wert hat und bei einem Übergang des Steuersignals auf einen zweiten Wert das Datensignal festhält;
- ersten Detektionsmitteln (3) zum Detektieren des Auftritts von Spitzenwerten des Datensignals;
- Mitteln zum Erzeugen eines einstweiligen Slicepegels (S);
- zweiten Detektionsmitteln (4) um zu Detektieren, ob das Datensignal den einstweiligen Slicepegel durchschneidet;
- einer mit den Detektionsmitteln gekoppelten Steuerschaltung (7) zum Erzeugen des ersten Wertes des Steuersignals, wenn das Datensignal den einstweiligen Slicepegel durchschneidet und des zweiten Wertes, wenn ein Spitzenwert des Datensignals auftritt.

2. Datenverarbeitungsschaltung nach Anspruch 1, dadurch gekennzeichnet, daß die ersten Detektionsmittel (3) durch eine Vergleichsschaltung (3) gebildet sind zum Vergleichen des Datensignals mit dem Ausgangssignal.

3. Datenverarbeitungsschaltung nach Anspruch 1, dadurch gekennzeichnet, daß die Mittel zum Erzeugen des einstweiligen Slicepegels durch ein Tiefpaßfilter (5) gebildet sind, dem das Ausgangssignal zugeführt wird.

4. Datenverarbeitungsschaltung nach Anspruch 1, dadurch gekennzeichnet, daß die Mittel zum Erzeugen des einstweiligen Slicepegels durch ein Tiefpaßfilter (5) gebildet sind, dem das Datensignal zugeführt wird.

5. Datenverarbeitungsschaltung nach Anspruch 1, dadurch gekennzeichnet, daß die Schaltungsanordnung weiterhin eine erste Abtast-und-Halteschaltung (8) aufweist zum Abtasten des Ausgangssignals beim Auftritt positiver Spitzenwerte zum Erhalten einer positiven Umhüllenden (PE) und eine zweite Abtast-und-Halteschaltung (9) zum Abtasten des Ausgangssignals beim Auftritt negativer Spitzenwerte zum Erhalten einer negativen Umhüllenden (NE).

6. Datenverarbeitungsschaltung nach Anspruch 5, dadurch gekennzeichnet, daß die Schaltungsanordnung weiterhin Mittel (61, 62, 63) aufweist zum Erzeugen eines weiteren Slicepegels durch Mittelung der positiven und negativen Umhüllenden.

7. Schaltungsanordnung zum Messen der Amplitude eines Datensignals, gekennzeichnet durch:
- eine erste Datenverarbeitungsschaltung (70) nach Anspruch 5 zum Erhalten der positiven und negativen Umhüllenden (PE1, NE1) des Datensignals (D);
- Mittel zum Subtrahieren (71) der genannten Umhüllenden voneinander zum Erhalten eines Differenzsignals (X1);
- eine zweite Datenverarbeitungsschaltung (72) nach Anspruch 5, der das Differenzsignal zugeführt wird zum Erhalten der positiven und negativen Umhüllenden (PE2, NE2) des Differenzsignals (X1);
- Mittel (73, 74) zum Bestimmen der Amplitude des datensignals durch Mittelung der positiven und negativen Umhüllenden des Differenzsignals.

## Revendications

1. Circuit de traitement de données destiné à traiter un signal de données série (D), comprenant :
- un circuit suiveur-bloqueur (2), auquel le signal de données (D) et un signal de commande (C) sont appliqués, pour générer un signal de sortie (T) qui suit le signal de données lorsque le signal de commande a une première valeur et maintenir le signal de données, lors de la transition du signal de commande à une deuxième valeur;
- des premiers moyens de détection (3) pour détecter l'apparition de valeurs de crête du signal de données;
- des moyens pour générer un seuil de comparaison provisoire (S);
- des deuxièmes moyens de détection (4) pour détecter si le signal de données croise le seuil de comparaison provisoire;
- un circuit de commande (7) couplé aux moyens de détection pour générer la première valeur du signal de commande si le signal de données croise le seuil de comparaison provisoire et pour générer la deuxième valeur si une valeur de crête du signal de données apparaît.

2. Circuit de traitement de données suivant la revendication 1, caractérisé en ce que les premiers moyens de détection (3) sont constitués par un comparateur (3) destiné à comparer le signal de données au signal de sortie.

3. Circuit de traitement de données suivant la revendication 1, caractérisé en ce que les moyens destinés à générer le seuil de comparaison provisoire sont constitués par un filtre passe-bas (5) auquel est appliqué le signal de sortie.

4. Circuit de traitement de données suivant la revendication 1, caractérisé en ce que les moyens destinés à générer le seuil de comparaison provisoire sont constitués par un filtre passe-bas (5) auquel est appliqué le signal de données.

5. Circuit de traitement de données suivant la revendication 1, caractérisé en ce que le circuit comprend, en outre, un premier circuit échantillonneur-bloqueur (8) pour échantillonner le signal de sortie lorsque des valeurs de crête apparaissent de manière à obtenir une enveloppe positive (PE), et un deuxième circuit échantillonneur-bloqueur (9) pour échantillonner le signal de sortie lorsque des valeurs de crête négatives apparaissent de manière à obtenir une enveloppe négative.

6. Circuit de traitement de données suivant la revendication 5, caractérisé en ce que le circuit comprend, en outre, des moyens (61, 62, 63) pour générer un seuil de comparaison supplémentaire par moyennage des enveloppes positive et négative.

7. Dispositif destiné à mesurer l'amplitude d'un signal de données, caractérisé par :
- un premier circuit de traitement de données (70) suivant la revendication 5, destiné à obtenir les enveloppes positive et négative (PE1, NE1) du signal de données (D);
- des moyens (71) destinés à soustraire lesdites enveloppes l'une de l'autre de manière à obtenir un signal de différence (X1);
- un deuxième circuit de traitement de données (72) suivant la revendication 5, auquel le signal de différence est appliqué pour obtenir les enveloppes positive et négative (PE2, NE2) du signal de différence (X1);
- des moyens (73, 74) destinés à déterminer l'amplitude du signal de données par moyennage des enveloppes positive et négative du signal de différence.
